# EUROPEAN PATENT SPECIFICATION

(11) **EP 3 146 247 B1**
(45) Date of publication and mention of the grant of the patent: **30.01.2019**
(21) Application number: 15723530.0
(22) Date of filing: 21.05.2015
(51) Int. Cl.: F16L 17/10, F16L 19/065, F16L 21/08, F16L 37/62, F16L 21/04

(54) **FITTING FOR COUPLING TO A PIPE**
ANSCHLUSSSTÜCK ZUR BEFESTIGUNG AN EIN ROHR
RACCORD POUR RACCORDEMENT À UN TUYAU

(30) Priority: 22.05.2014 NL 2012869
(43) Date of publication of application: 29.03.2017
(73) Proprietor: Georg Fischer WAGA N.V., 8161 PA Epe (NL)
(72) Inventor: WELLINK, Roel Alexander Maria, 7548 PD Usselo (NL); GIESEN, Leonardus Henricus Wilhelmus, 7542 LT Enschede (NL); NIJSEN, Andreas Jacobus Louis, 7521 AT Enschede (NL); HULSEBOS, Michel Paul, 7451 MN Holten (NL)
(74) Representative: Fenner, Seraina
(86) International application number: PCT/EP2015/061203
(87) International publication number: WO 2015/177258

(56) References cited:
- EP-A1- 1 906 073
- EP-A2- 0 794 378
- WO-A1-03/010461
- WO-A1-2011/120669
- WO-A1-2013/138014
- FR-A- 1 401 761
- GB-A- 2 415 472

## Description

The invention relates to a fitting for coupling to at least one pipe.

Such fittings are commonly applied and an example of such a fitting is for instance known from EP-B-2 414 719.

Despite the high level of development that this known fitting has already gone through, a notable disadvantage of this known fitting still is its weight and its relative cumbersome installation procedure. In connection therewith labour conditions that apply during installation of the known fitting could benefit from improvement. Another disadvantage of the known fitting is that when the fitting is applied to fit on a plastic pipe, an inner metal ring needs to be applied in the plastic pipe when the fitting is placed under pressure, to prevent that over time the plastic pipe is deformed.

WO 2011/120669 A1 discloses a pipe connection device for securely and sealingly connecting an insertion end to a coupling having a clamp ring made of a plurality of elements disposed so as to be displaceable relative to one another in the circumferential direction, comprising a variable circumference and that can be clamped against a coupling ring by means of a clamping ring.

FR 1 401 761 A discloses a pressure head for pressure testing of pipes. An annular ring having a sealing and locking function for a pipe is inserted into a housing of the pressure head. The internal pressure within the housing and pipe is by-passed via channels towards a pressure chamber which acts on the outer circumference of the annular ring in order to press it radially towards the pipe.

WO2013/138014 discloses a fitting for coupling to at least one pipe, comprising:
- a sleeve end for receiving the pipe;
- at least one sealing member to provide a seal to the pipe received in said sleeve end;
- a pressure member for applying a pressure to the sleeve end and to the pipe;
- gripper teeth provided on the pressure member and arranged to act on the pipe; and
- actuation means that are tuneable from outside the sleeve end for arranging that a pressure is applied to the pressure member.

The fitting of WO2013/138014 is arranged with actuation means that are tuneable from a single point outside the sleeve end and with a pressure member that is entirely contained within the sleeve end, and actuation means that cooperate with a slidable ring with ramps, which ring is provided on the outside of the sleeve end. The actuation means hook behind the pressure member. Turning the ring places pressure on the actuation means to move in the longitudinal direction of the sleeve end and correspondingly places pressure on the pressure member.

An extremity of the actuation means that is located inside the sleeve end and adjacent the pressure member is received within a slot of rubber sealing means that are drawn against the sleeve end and against the pipe, due to the action of the turning of the ring that cooperates with the part of the actuation means that is outside of the sleeve end. One major disadvantage of this construction is that amongst other factors, the sealing action heavily relies on the security of the connection between the actuation means and the rubber sealing means.

It is an object of the invention to seek improvement on at least some of these aspects of the known fittings.

The fitting of the invention is characterized in that the sleeve end is provided with an aperture providing a fluid and/or gas connection from the inside of the pipe towards a radially outward circumferential surface of the pressure member. This is a very reliable construction to safeguard that the fitting will remain gas and watertight during its complete life expectancy, which may be 50 years or more.

One of the major benefits of the construction of the fitting according to the invention is that it is inherently safe to apply to a pipe of any material due to the fact that the pressure to be applied with the actuation means on the pressure member can be reduced to a level which is sufficient to hold the pipe in place without compromising its gas and watertight properties. This property is attributed to the feature that if the pressure in the pipe rises, this pressure will also operate on the pressure member and come in addition to the pressure to which the pressure member is subjected by the actuation means. This also brings about that the conventional application of an inner metal ring as a support for a plastic pipe to which the fitting is applied, can be obviated. Moreover the fitting as such is possible to be construed very lightly, and even in plastic material.

There are several options available to provide an effective seal between the environment within the pipe and outside the pipe. In one embodiment the at least one sealing member is positioned between at least the pressure member and the pipe. Further preferably the at least one sealing member is also positioned between the pressure member and the sleeve end. The pressure applied on the pressure member and by the pressure member secures then that under all circumstances the seal will remain effective. It is also feasible that there are separate sealing members positioned between the pressure member and the sleeve end, respectively between the pressure member and the pipe. In some embodiments it is preferable that a second sealing member is provided to the sleeve end, in particular between a sleeve and a pressurizing organ forming part of said sleeve end.

Another option which may be desirable under certain circumstances is that the at least one sealing member is connected to and/or follows at least part of an inner periphery of the sleeve end. In this situation there is no need to have the seal at the side that connects or adjoins the sleeve end to be subjected to pressurization by the pressure member.

Preferably the sleeve end and the pressure member have adjoining slanting contacting surfaces to arrange that a force applied to the pressure member in parallel with a longitudinal body axis of the sleeve end, acts on the pressure member with a component perpendicular to said longitudinal body axis on the pipe received in said sleeve end.

It is further noted that the fitting of the invention is very versatile in that the actuation means can be either hydraulically, pneumatically and/or mechanically tuneable.

In one suitable embodiment the actuation means are pneumatically tuneable by arranging that a bellow is arranged to press towards the pressure member, and valve means are applied at a circumferentially outwards position of the sleeve end for pressurizing said bellow. The bellow is arranged to maintain its pressure during the lifetime of the fitting.

In another suitable embodiment the actuation means are mechanically tuneable by tuning means embodied with a bolt and nut, a screw connection, a rack and pinion or a spindle drive.

The invention will hereinafter be further elucidated with reference to the drawing.

In the drawing;
- figures 1.1 - 1.4 reflect various embodiments of the fitting of the invention in which different types of seals are applied;
- figures 2.1 - 2.6 reflect various embodiments of the fitting of the invention with a screw type axial pressurizing of the fitting;
- figures 3.1 - 3.6 reflect various embodiments of the fitting of the invention with a bellow type axial pressurizing of the fitting; and
- figures 4.1 and 4.2 reflect to embodiments of the fitting of the invention with a bellow type radial pressurizing of the fitting.

Whenever in the figures the same reference numerals are applied, these numerals refer to the same parts.

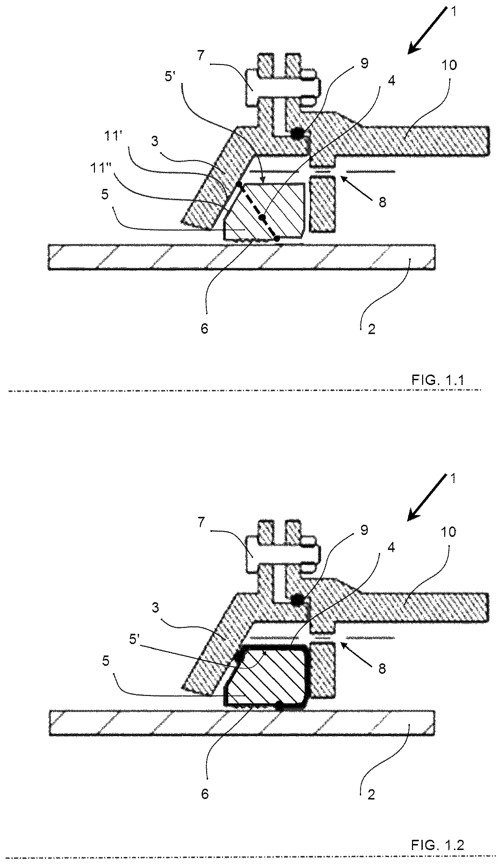

Turning now first to figure 1.1 an embodiment of the fitting 1 of the invention for application with a pipe 2 is shown, which has a sleeve end 3, 10 comprising a pressurizing organ 3 and a sleeve 10 for receiving the pipe 2, at least one sealing member 4 to provide a seal between the sleeve end 3, 10 and the pipe 2, a pressure member 5 for applying a pressure to the sleeve end 3, 10 and to the pipe 2, gripper teeth 6 provided on the pressure member 5 and arranged to act on the pipe 2, and actuation means 7 that are tuneable from a single point outside the sleeve end 3, 10 for arranging that the pressurizing organ 3 applies a pressure to the pressure member 5 acting on the pipe 2.

The sleeve end 3, 10, in particular the sleeve 10 is provided with an aperture 8 providing a fluid and/or gas connection form the inside of the pipe 2 towards a radially outward circumferential surface 5' of the pressure member 5. By means of this aperture 8 the pressure member 5 is during use subject to a pressure prevailing at the inside of the pipe 2.

The sealing member 4 is at least positioned between the pressure member 5 and the pipe 2. In this particular embodiment of figure 1.1 the sealing member 4 is also positioned between the pressure member 5 and the sleeve end 3, 10, in particular between the pressure member 5 and the pressurizing organ 3. For this purpose the sealing member 4 extends through the pressure member 5. Another option is shown in figure 1.2 in which the sealing member 4 follows the outer periphery of the pressure member 5. In both the embodiments of figure 1.1 and 1.2 a further sealing member is indicated with 9 and positioned between the pressurizing organ 3 and sleeve 10 forming part of the sleeve end 3, 10.

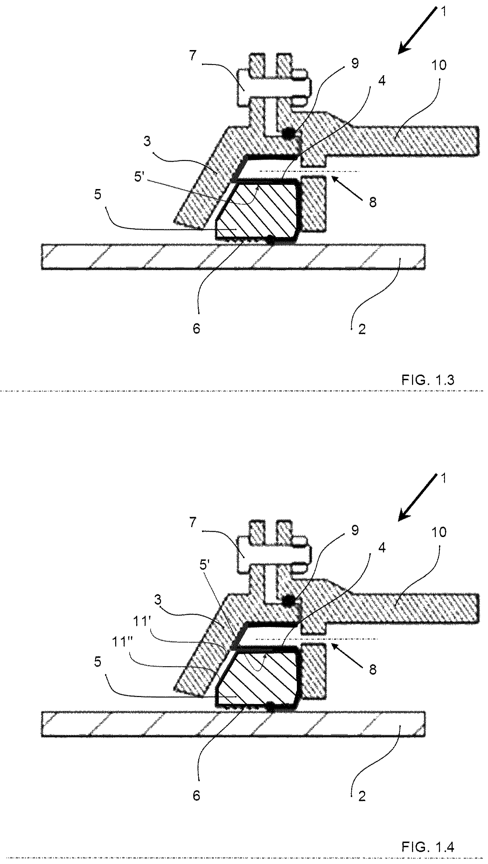

In still another embodiment as shown in figure 1.3 and 1.4 the sealing member 4 is connected to and/or follows at least part of an inner periphery of the sleeve end 3, 10.

Although it is not shown in the figures since this will be readily apparent to the skilled person, it is also feasible that there is a first sealing member positioned between the pressure member 5 and the sleeve end 3, 10 and a second sealing member positioned between the pressure member 5 and the pipe 2.

All the embodiments shown in figures 1.1 - 1.4 exhibit that the sleeve 3, 10, in particular the pressurizing organ 3 and the pressure member 5 have adjoining slanting contacting surfaces 11', 11'' to arrange that a force applied to the pressure member 5 in parallel with a longitudinal body axis of the sleeve end 3, 10 or the pipe 2, acts on the pressure member 5 with a component perpendicular to said longitudinal body axis on the pipe 2 received in said sleeve end 3, 10.

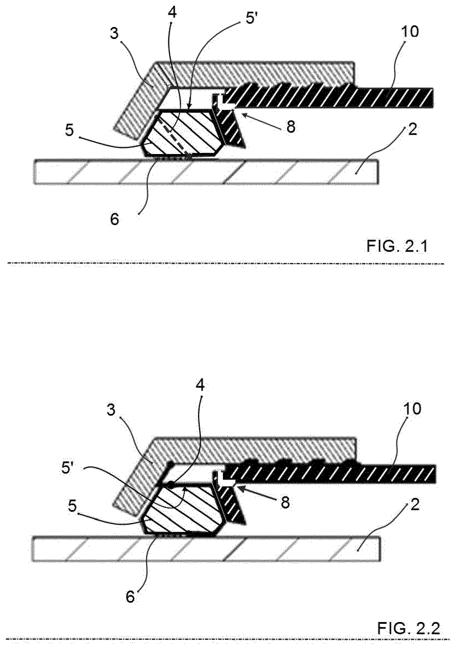

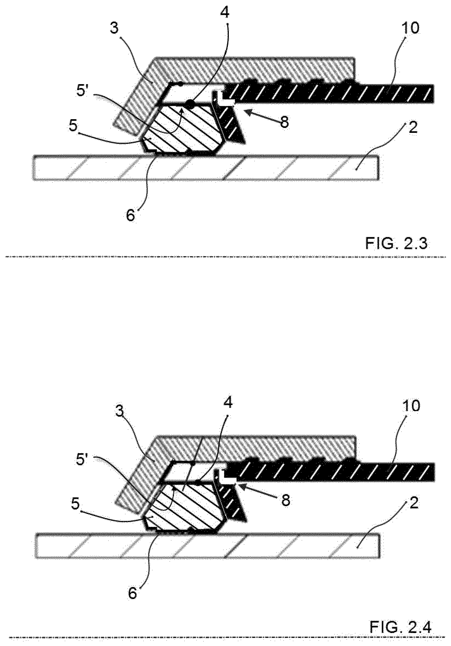

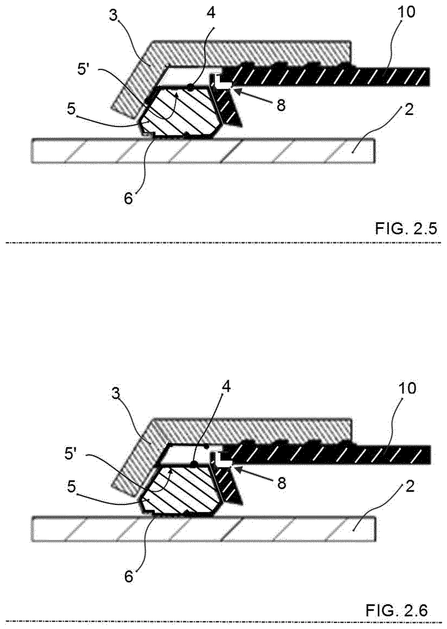

It is further noted by the inventors that the actuation means of the fitting 1 of the invention are pneumatically and/or mechanically tuneable. As an example figures 2.1 - 2.6 shows fittings of the invention having different embodiments of the applied sealing means 4 corresponding to what is shown in figures 1.1 - 1.4, yet in all cases of the embodiments shown in figures 2.1 - 2.6 the actuation means are embodied as a screw connection between the pressurizing organ 3 and the sleeve 10. Other embodiments for the actuation means are however also feasible such as the bolt and nut connection shown in the embodiments of figures 1.1 - 1.4. Also a rack and pinion or a spindle drive are feasible actuation means. Essential is however that also in such other embodiments the pressure member 5 is during use subject to a pressure prevailing at the inside of the pipe 2. According to the well-known law of Boile Gay-Lussac a fluid or gas pressure propagates equal in all directions. Accordingly the invention applies this pressure beneficially on the radially outward circumferential surface 5' of the pressure member 5.

Like is done in the embodiments of figures 1.1 - 1.4, the embodiments of figures 2.1 - 2.6 show the preferential feature that the sleeve end 3, 10, in this case again sleeve 10 is provided with an aperture 8 providing a fluid and/or gas connection between the inside of the pipe 2 and the radially outward circumferential surface 5' of the pressure member 5.

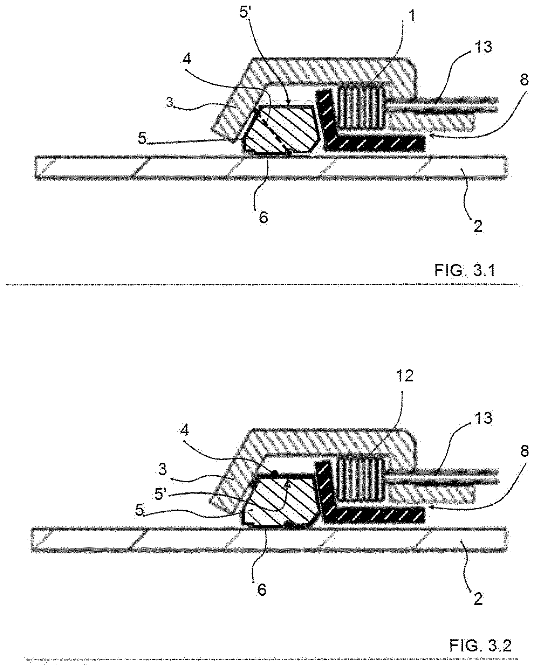

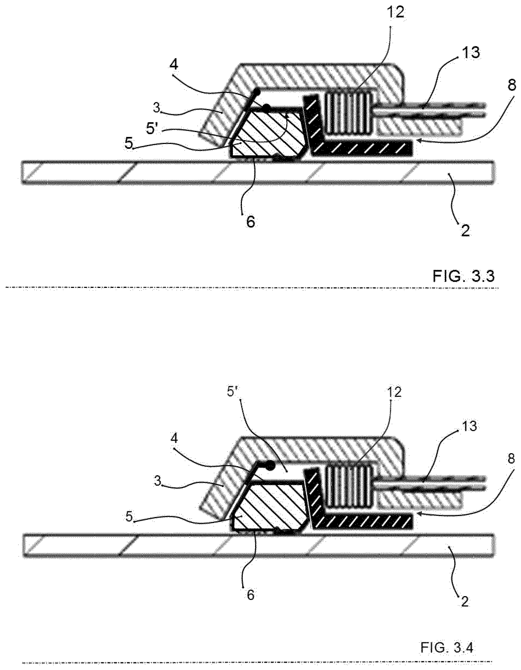

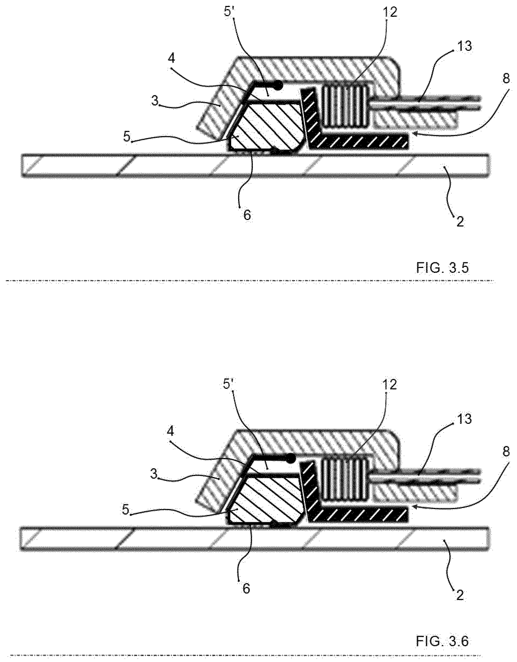

A further variation regarding the possibly applied actuation means is shown in figures 3.1 - 3.6. In these embodiments the sealing means 4 again are shown in different variations corresponding to the embodiments of figures 1.1 - 1.4, yet the actuation means are this time embodied as pneumatically tuneable by arranging that a bellow 12 is arranged to press towards the pressure member 5. The bellow 12 is preferably applied in combination with valve means 13 at a circumferentially outwards position of the sleeve end 3 for pressurizing said bellow 12. Again an aperture 8 is applied providing a fluid and/or gas connection between the inside of the pipe 2 and the radially outward circumferential surface 5' of the pressure member 5.

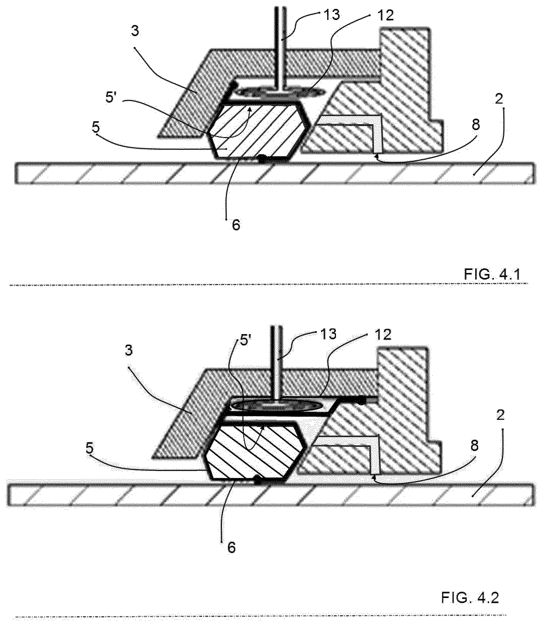

In figure 4.1 and 4.2 a variation of two embodiments is shown in which the bellow 12 acts radially on the pressure member 5. Also an aperture 8 is shown providing a fluid and/or gas connection between the inside of the pipe 2 and the radially outward circumferential surface 5' of the pressure member 5 of which the bellow 12 directly acts.

Although the invention has been discussed in the foregoing with reference to a variety of embodiments of the fitting of the invention, the invention is not restricted to these particular embodiments which can be varied further in many ways without departing from the invention as embodied in the claims. The discussed exemplary embodiments shall therefore not be used to construe the appended claims strictly in accordance therewith. On the contrary the embodiments are merely intended to explain the wording of the appended claims without intent to limit the claims to the discussed exemplary embodiments. The scope of protection of the invention shall therefore be construed in accordance with the appended claims only, wherein a possible ambiguity in the wording of the claims shall be resolved using these exemplary embodiments.

## Claims

1. A fitting (1) for coupling to at least one pipe (2), comprising:
- a sleeve end (3, 10) for receiving the pipe (2);
- at least one sealing member (4, 9) to provide a seal to the pipe (2) received in said sleeve end (3, 10);
- a pressure member (5) for applying a pressure to the sleeve end (3, 10) and to the pipe (2);
- gripper teeth (6) provided on the pressure member (5) and arranged to act on the pipe (2); and
- actuation means (7, 12) that are tuneable from outside the sleeve end (3, 10) for arranging that a pressure is applied to the pressure member (5),
**wherein** in use the pressure member (5) is subject to a pressure prevailing at the inside of the pipe (2) **characterized in that** the sleeve end (3, 10) is provided with an aperture (8) providing a fluid and/or gas connection from the inside of the pipe (2) towards a radially outward circumferential surface (5') of the pressure member (5).

2. A fitting (1) according to claim 1, **characterized in that** the at least one sealing member (4) is positioned between at least the pressure member (5) and the pipe (2) .

3. A fitting (1) according to claim 1 or 2, **characterized in that** the at least one sealing member (4) is further positioned between the pressure member (5) and the sleeve end (3, 10).

4. A fitting (1) according to any one of claims 1 - 3, **characterized in that** it comprises a second sealing member (9) between a sleeve (10) and a pressurizing organ (3) forming part of said sleeve end (3, 10).

5. A fitting (1) according to any one of claims 1 - 3, **characterized in that** the at least one sealing member (4) is connected to and/or follows at least part of an inner periphery of the sleeve end (3, 10).

6. A fitting (1) according to any one of claims 1 - 5, **characterized in that** there are separate sealing members positioned between the pressure member (5) and the sleeve end (3, 10), respectively between the pressure member (5) and the pipe (2).

7. A fitting (1) according to any one of the previous claims 1 - 6, wherein the sleeve end (3, 10) and the pressure member (5) have adjoining slanting contacting surfaces (11', 11'') to arrange that a force applied to the pressure member (5) with the actuation means (7, 12) in parallel with a longitudinal body axis of the sleeve end (3, 10), acts on the pressure member (5) with a component perpendicular to said longitudinal body axis on the pipe (2) received in said sleeve end (3, 10).

8. A fitting (1) according to any one of claims 1 - 7, **characterized in that** the actuation means (7, 12) are hydraulically, pneumatically and/or mechanically tuneable.

9. A fitting (1) according to claim 8, **characterized in that** the actuation means are pneumatically tuneable by arranging that a bellow (12) is arranged to press towards the pressure member (5), and valve means (13) are applied at a circumferentially outwards position of the sleeve end (3, 10) for pressurizing said bellow (12).

10. A fitting (1) according to claim 8, **characterized in that** the actuation means are mechanically tuneable by tuning means embodied with a bolt and nut (7), a screw connection, a rack and pinion or a spindle drive.

## Patentansprüche

1. Anschlussstück (1) zur Befestigung an mindestens ein Rohr (2), aufweisend:
- ein Hülsenende (3, 10) zur Aufnahme des Rohrs (2);
- mindestens ein Dichtungselement (4, 9), um eine Abdichtung an dem Rohr (2) bereitzustellen, welches in dem Hülsenende (3, 10) aufgenommen ist;
- ein Druckelement (5) zum Aufbringen eines Drucks auf das Hülsenende (3, 10) und auf das Rohr (2);
- Greifzähne (6), welche an dem Druckelement (5) vorgesehen sind und dafür eingerichtet sind, um auf das Rohr (2) einzuwirken; und
- Betätigungsmittel (7, 12), welche von außerhalb des Hülsenendes (3, 10) einstellbar sind, um einzurichten, dass ein Druck auf das Druckelement (5) ausgeübt wird,
wobei das Druckelement (5) bei der Verwendung einem im Inneren des Rohrs (2) herrschenden Druck unterliegt, **dadurch gekennzeichnet, dass** das Hülsenende (3, 10) mit einer Öffnung (8) versehen ist, welche eine Fluid- und/oder Gasverbindung aus dem Inneren des Rohrs (2) in Richtung auf eine radial äußere Umfangsfläche (5') des Druckelements (5) bereitstellt.

2. Anschlussstück (1) nach Anspruch 1, **dadurch gekennzeichnet, dass** das mindestens eine Dichtungselement (4) zwischen zumindest dem Druckelement (5) und dem Rohr (2) positioniert ist.

3. Anschlussstück (1) nach Anspruch 1 oder 2, **dadurch gekennzeichnet, dass** das mindestens eine Dichtungselement (4) ferner zwischen dem Druckelement (5) und dem Hülsenende (3, 10) positioniert ist.

4. Anschlussstück (1) nach einem der Ansprüche 1-3, **dadurch gekennzeichnet, dass** es ein zweites Dichtungselement (9) zwischen einer Hülse (10) und einem Druckbeaufschlagungsorgan (3) aufweist, welches Teil des Hülsenendes (3, 10) bildet.

5. Anschlussstück (1) nach einem der Ansprüche 1-3, **dadurch gekennzeichnet, dass** das mindestens eine Dichtungselement (4) mit zumindest einem Teil eines inneren Umfangs des Hülsenendes (3, 10) verbunden ist und/oder diesem folgt.

6. Anschlussstück (1) nach einem der Ansprüche 1-5, **dadurch gekennzeichnet, dass** es getrennte Dichtungselemente gibt, welche zwischen dem Druckelement (5) und dem Hülsenende (3, 10) beziehungsweise zwischen dem Druckelement (5) und dem Rohr (2) positioniert sind.

7. Anschlussstück (1) nach einem der vorhergehenden Ansprüche 1-6, wobei das Hülsenende (3, 10) und das Druckelement 5 angrenzende, schräge Kontaktflächen (11', 11'') aufweisen, um einzurichten, dass eine Kraft, welche parallel zu einer Körperlängsachse des Hülsenendes (3, 10) auf das Druckelement (5) mit den Betätigungsmitteln (7, 12) aufgebracht wird, auf das Druckelement mit einer Komponente senkrecht zu der Körperlängsachse auf das in dem Hülsenende (3, 10) aufgenommene Rohr (2) wirkt.

8. Anschlussstück (1) nach einem der Ansprüche 1-7, **dadurch gekennzeichnet, dass** die Betätigungsmittel (7, 12) hydraulisch, pneumatisch und/oder mechanisch einstellbar sind.

9. Anschlussstück (1) nach Anspruch 8, **dadurch gekennzeichnet, dass** die Betätigungsmittel pneumatisch einstellbar sind, indem eingerichtet ist, dass ein Faltenbalg (12) angeordnet ist, um gegen das Druckelement (5) zu drücken, und Ventilmittel (13) an einer umfangsmäßig äußeren Position des Hülsenendes (3, 10) eingesetzt sind, um den Faltenbalg (12) mit Druck zu beaufschlagen.

10. Anschlussstück (1) nach Anspruch 8, **dadurch gekennzeichnet, dass** die Betätigungsmittel durch Einstellmittel, welche durch eine Schraube und Mutter (7), eine Schraubenverbindung, eine Zahnstange und Ritzel oder einen Spindelantrieb verkörpert werden, mechanisch einstellbar sind.

## Revendications

1. Raccord (1) pour le raccordement à au moins un tuyau (2), comprenant :
- une extrémité de manchon (3, 10) pour recevoir le tuyau (2) ;
- au moins un organe d'étanchéité (4, 9) pour assurer un joint avec le tuyau (2) reçu dans ladite extrémité de manchon (3, 10) ;
- un organe de pression (5) pour appliquer une pression à l'extrémité de manchon (3, 10) et au tuyau (2) ;
- des dents d'accrochage (6) prévues sur l'organe de pression (5) et agencées de manière à agir sur le tuyau (2) ; et
- des moyens d'actionnement (7, 12) qui peuvent être réglés depuis l'extérieur de l'extrémité de manchon (3, 10) pour faire en sorte qu'une pression soit appliquée à l'organe de pression (5),
l'organe de pression (5), pendant l'utilisation, étant soumis à une pression régnant à l'intérieur du tuyau (2), **caractérisé en ce que** l'extrémité de manchon (3, 10) est pourvue d'une ouverture (8) fournissant une connexion fluidique et/ou gazeuse de l'intérieur du tuyau (2) vers une surface circonférentielle radialement extérieure (5') de l'organe de pression (5).

2. Raccord (1) selon la revendication 1, **caractérisé en ce que** l'au moins un organe d'étanchéité (4) est positionné entre au moins l'organe de pression (5) et le tuyau (2).

3. Raccord (1) selon la revendication 1 ou 2, **caractérisé en ce que** l'au moins un organe d'étanchéité (4) est en outre positionné entre l'organe de pression (5) et l'extrémité de manchon (3, 10).

4. Raccord (1) selon l'une quelconque des revendications 1 à 3, **caractérisé en ce qu'**il comprend un deuxième organe d'étanchéité (9) entre un manchon (10) et un organe de pressurisation (3) faisant partie de ladite extrémité de manchon (3, 10) .

5. Raccord (1) selon l'une quelconque des revendications 1 à 3, **caractérisé en ce que** l'au moins un organe d'étanchéité (4) est connecté à et/ou suit au moins une partie d'une périphérie intérieure de l'extrémité de manchon (3, 10).

6. Raccord (1) selon l'une quelconque des revendications 1 à 5, **caractérisé en ce que** des organes d'étanchéité séparés sont positionnés entre l'organe de pression (5) et l'extrémité de manchon (3, 10), respectivement entre l'organe de pression (5) et le tuyau (2).

7. Raccord (1) selon l'une quelconque des revendications précédentes 1 à 6, dans lequel l'extrémité de manchon (3, 10) et l'organe de pression (5) présentent des surfaces de contact inclinées adjacentes (11', 11'') pour faire en sorte qu'une force appliquée à l'organe de pression (5) par les moyens d'actionnement (7, 12) parallèlement à un axe de corps longitudinal de l'extrémité de manchon (3, 10) agisse sur l'organe de pression (5) avec une composante perpendiculaire audit axe de corps longitudinal sur le tuyau (2) reçu dans ladite extrémité de manchon (3, 10).

8. Raccord (1) selon l'une quelconque des revendications 1 à 7, **caractérisé en ce que** les moyens d'actionnement (7, 12) sont réglables de manière hydraulique, pneumatique et/ou mécanique.

9. Raccord (1) selon la revendication 8, **caractérisé en ce que** les moyens d'actionnement sont réglables de manière pneumatique en faisant en sorte qu'un soufflet (12) soit prévu pour presser en direction de l'organe de pression (5), et des moyens de soupape (13) sont appliqués au niveau d'une position circonférentiellement extérieure de l'extrémité de manchon (3, 10) en vue de pressuriser ledit soufflet (12) .

10. Raccord (1) selon la revendication 8, **caractérisé en ce que** les moyens d'actionnement sont réglables mécaniquement en réglant des moyens mis en oeuvre avec un boulon et un écrou (7), une connexion à vis, un entraînement à crémaillère ou un entraînement à broche.
